# EUROPÄISCHE PATENTSCHRIFT

(11) **EP 4 387 854 B1**
(45) Veröffentlichungstag und Bekanntmachung des Hinweises auf die Patenterteilung: **01.10.2025**
(21) Anmeldenummer: 22764466.3
(22) Anmeldetag: 14.08.2022
(51) Int. Cl.: B60D 1/62, B62D 53/12, F16L 3/01, H02G 11/00

(54) **LEITUNGSFÜHRUNGSVORRICHTUNG**
CABLE ROUTING DEVICE
DISPOSITIF D'ACHEMINEMENT DE CÂBLE

(30) Priorität: 20.08.2021 DE 102021004253
(43) Veröffentlichungstag der Anmeldung: 26.06.2024
(73) Patentinhaber: JOST-Werke Deutschland GmbH, 63263 Neu-Isenburg (DE)
(72) Erfinder: ALGÜERA, José Manuel, 63739 Aschaffenburg (DE); SCHLOTTHAUER, Rudolf, 63263 Neu-Isenburg (DE); HANSEN, Paul, 63263 Neu-Isenburg (DE)
(74) Vertreter: Straubel, Dirk
(86) Internationale Anmeldenummer: PCT/IB2022/057599
(87) Internationale Veröffentlichungsnummer: WO 2023/021391

(56) Entgegenhaltungen:
- EP-A2- 0 084 712
- WO-A1-2004/020321
- CN-A- 112 622 538
- DE-C- 817 556
- DE-C- 827 450
- DE-U1- 202007 005 412
- US-A- 2 875 496
- US-A- 4 076 272
- US-A1- 2005 236 528
- US-A1- 2021 156 494

## Beschreibung

Die Erfindung betrifft eine Leitungsführungsvorrichtung für eine Anbindung eines Leitungsstranges an ein zu einem Fahrzeug bewegliches Trägerelement gemäß der im Oberbegriff des Anspruchs 1 stehenden Merkmale. Überdies ist die Erfindung auch in Kombination mit einem Sattelauflieger, Anhänger oder Gelenkfahrzeug verwirklicht. Das Dokument WO 2004/020321 A1 offenbart eine gattungsgemäße Leitungsführungsvorrichtung.

Sattelzüge bestehen üblicherweise aus einem Zugfahrzeug und einem Sattelauflieger, die mittels einer auf dem Zugfahrzeug angeordneten Sattelkupplung und einem am Sattelauflieger angebrachten Königszapfen lösbar miteinander verbunden sind. Hierdurch ist es möglich, einen mit dem Zugfahrzeug verbundenen Sattelauflieger abzustellen und anstelle dessen einen anderen Sattelauflieger aufzunehmen. Für derartige Kupplungsvorgänge muss der Fahrer für gewöhnlich aussteigen und für ein Abkuppeln mechanisch die Sattelkupplung öffnen beziehungsweise nach dem Ankuppeln den Verschlusszustand des korrekt in die Sattelkupplung eingefahrenen Königszapfens kontrollieren.

Ein Gliederzug besteht üblicherweise aus einem Zugfahrzeug und einem daran angekuppelten Anhänger, der mittels einer Deichsel an einer Anhängerkupplung des Zugfahrzeugs lösbar befestigt ist.

Bei einem Gelenkfahrzeug handelt es sich beispielsweise um einen Knickgelenkbus, wie er im öffentlichen Nahverkehr eingesetzt wird. Ein Gelenkfahrzeug kann zum Beispiel aber auch ein Radlader, eine Straßenwalze oder ein knickgelenkter Muldenkipper sein. Die Gelenkfahrzeuge haben gemein, dass sie aus einem ersten und zweiten Fahrzeugteil mit einem dazwischenliegenden Drehgelenk konzipiert sind. Das erste und zweite Fahrzeugteil sind im Fahrbetrieb nicht voneinander trennbar. Bei Kurvenfahrten des Gelenkfahrzeugs verändern der erste und zweite Fahrzeugteil ihre Relativlage zueinander.

In der Vergangenheit gab es bereits Bestrebungen, den An- und Abkuppelvorgang beispielsweise eines Sattelaufliegers an das Zugfahrzeug zu automatisieren und dabei auch eine Verbindung von Versorgungsleitungen herzustellen. So ist beispielsweise aus der DE 10 2004 024 333 A1 ein Steckkupplungssystem bekannt geworden, bei welchem während des Ankuppelns von Sattelauflieger und Zugfahrzeug ein schwenkbar zu dem Königszapfen gelagerter Keilschwenkrahmen in eine Einfahröffnung der Sattelkupplung eingefahren und dort nach dem Verriegeln des Königszapfens gehalten ist. Während Kurvenfahrten des Sattelzuges schwenkt der Keilschwenkrahmen relativ zu dem Sattelauflieger, so dass die Versorgungsleitungen entsprechend lang bemessen sein müssen, um nicht bei scharfen Kurvenfahrten abzureißen. In Geradeausfahrt hängen die Versorgungsleitungen jedoch durch und könnten beschädigt werden.

Aus diesem Grund wird in der DE 10 2004 044 992A1 vorgeschlagen, an dem Sattelauflieger einen Leitungsspeicher anzubringen, in welchem die aus dem Keilschwenkrahmen austretenden Versorgungsleitungen auf einer federvorgespannten Trommelscheibe aufgewickelt und bei Kurvenfahrt unter Spannung abgewickelt werden. Ein wesentlicher Nachteil dieses bekannten Leitungsspeichers liegt in dem vergleichsweise großen Bauraumbedarf und der Problematik, einen Leitungsstrang mit einer immer größeren Anzahl von Versorgungsleitungen auf der Trommelscheibe unterbringen zu müssen, ohne den für den Leitungsstrang vorgesehenen minimal zulässigen Biegeradius zu unterschreiten.

Der Erfindung lag die Aufgabe zugrunde, eine kompakt bauende Leitungsführungsvorrichtung bereitzustellen, die geeignet ist, einen geringen Durchhang eines Leitungsstranges mit großem Durchmesser sicherzustellen.

Die Aufgabe wird erfindungsgemäß mit den Merkmalen des Anspruchs 1 gelöst. Unter einem Federelement wird ein unter den zu erwartenden Betriebslasten reversibles Bauteil verstanden, welches in seiner axialen Erstreckung zwischen einer maximalen Länge und einer minimalen Länge dehnbar ist. Das Federelement kann prinzipiell aus einem Federstahl, Kunststoff oder einer Gummimischung hergestellt sein. Grundsätzlich ist der Leitungsstrang stets lose in, an oder auf dem Federelement abgelegt und ansonsten nicht mit diesem verbunden.

Unter dem Begriff "lose" wird eine mechanische Entkopplung des Federelementes und Leitungsstranges verstanden. Folglich kann sich das Federelement unabhängig von dem Leitungsstrang längen oder kürzen. In axialer Richtung des Leitungsstranges kann eine Relativbewegung zu dem Federelement stattfinden. Der Leitungsstrang ist von dem Federelement gestützt und braucht für eine axiale Bewegung lediglich die aus seiner Gewichtskraft resultierende Gleitreibung zu überwinden. In radialer Richtung ist der Leitungsstrang mit einem geringen Bewegungsmaß durch das Federelement geführt.

Während einer Kurvenfahrt verändert das Trägerelement seine Relativposition zu dem Leitungsspeicher, so dass der Abstand zwischen dem Trägerelement und dem Leitungsspeicher wächst und der Leitungsstrang diesen größeren Abstand überbrücken muss. In dieser Situation ist ein Teil des im Leitungsspeicher befindlichen Leitungsstranges von dem Trägerelement aus dem Leitungsspeicher herausgezogen. Fährt das Fahrzeug wieder geradeaus, verringert sich der Abstand zwischen dem Trägerelement und dem Leitungsspeicher, so dass der Leitungsstrang einen geringeren Abstand zu überbrücken braucht. In dieser Situation ist der Leitungsstrang von dem Trägerelement teilweise in den Leitungsspeicher zurückgeschoben.

Das Federelement sorgt einerseits dazu, dass der Leitungsstrang stets gestützt ist, nicht nach unten durchhängt und dadurch mit anderen Fahrzeugteilen kollidieren kann. Bei einer einschiebenden Bewegung des Leitungsstranges in den Leitungsspeicher verhindert das Federelement ein seitliches Auswandern des Leitungsstranges und sorgt für einen geschmeidigen Einlauf in den Leitungsspeicher.

Zweckmäßigerweise ist das Federelement an dem Trägerelement und/oder an dem Leitungsspeicher befestigt. Hierdurch ist das Federelement in seiner axialen Richtung ortsfest gehalten und der Leitungsstrang gleitet entkoppelt von diesem in den Leitungsspeicher. Sofern das Federelement sowohl an dem Trägerelement als auch dem Leitungsspeicher festgelegt ist, resultiert daraus der zusätzliche Vorteil, dass das Trägerelement aufgrund der Federvorspannung des Federelementes beispielsweise nach dem Abkuppeln zwangsausgerichtet ist. Insbesondere wenn das Trägerelement ein Keilschwenkrahmen ist, befindet sich dieser aufgrund der Zwangsausrichtung in einer korrekten Position für ein erneutes Ankuppeln.

Vorteilhafterweise ist das Federelement eine Schraubenfeder, ein dehnbarer Schlauch oder ein elastischer Faltenbalg. Die Schraubenfeder, der dehnbare Schlauch oder Faltenbalg kann den Leitungsstrang in Umfangsrichtung vollständig umgeben, wodurch dieser in alle Richtungen besonders günstig geführt und geschützt ist.

Das Federelement sollte eine Verdrehsicherung aufweisen oder gegen Verdrehung um seine Längsachse gesichert eingebaut sein. Hierdurch wird erreicht, dass sich das Federelement, insbesondere wenn das Federelement als Schraubenfeder ausgebildet ist, nicht durch Rotation um seine Längsachse aus der Befestigung herausdrehen kann.

Vorzugsweise ist der Leitungsstrang in dem Leitungsspeicher als eine Schlaufe eingelegt. Die Schlaufe kann beispielsweise mit einer U-Form, einer S-Form, einer Ω-Form oder als sich zuziehende Schlinge ausgebildet sein.

Die Schlaufe wird insbesondere von einem einlaufenden Abschnitt und einem abgehenden Abschnitt aufgespannt und umschließt einen maximalen Schlaufenwinkel von 270°, besonders bevorzugt maximal 205°, ganz besonders bevorzugt 200°, unabhängig von der Lage des Trägerelementes. Bei einer Ausführungsform der Schlaufe als zuziehende Schlinge sind mithin Schlaufenwinkel von 360° bis 400° realisierbar. Der einlaufende Abschnitt bewegt sich bei einer Schwenkbewegung des Trägerelementes aus dem Leitungsspeicher heraus und zieht die Schlaufe zusammen. Der abgehende Abschnitt ist vorzugsweise endseitig in oder an dem Leitungsspeicher festgelegt. Bei Geradeausfahrt ist der einlaufende Abschnitt überwiegend in den Leitungsspeicher gewandert.

Zweckmäßigerweise ist unabhängig von der Relativposition des Trägerelementes der Richtungssinn der Schlaufe stets gleich. Der einlaufende Abschnitt und der abgehende Abschnitt kreuzen sich typischerweise bei einer Schlaufe in U-Form, S-Form oder Ω-Form nicht. Bei einer sich zuziehenden Schlinge kreuzen sich der einlaufende und abgehende Abschnitt innerhalb des Leitungsspeichers.

In einer Geradeausfahrt-Stellung des Trägerelementes kann die Schlaufe innerhalb des Leitungsspeichers eine maximale Schlaufenlänge aufweisen. Die Schlaufe wird durch den einlaufenden Abschnitt in rückwärtiger Richtung geschoben und nimmt dadurch einen größeren Abschnitt des Leitungsstranges innerhalb des Leitungsspeichers auf.

In einer Kurvenfahrt-Stellung des Trägerelementes kann die Schlaufe hingegen innerhalb des Leitungsspeichers eine minimale Schlaufenlänge aufweisen. Ein Teil des Leitungsstranges ist seitens des einlaufenden Abschnittes aus dem Leitungsspeicher herausgezogen worden und die Schlaufe hat ihre Lage in der entgegengesetzten Richtung verändert und ihren Radius dabei verringert.

Sinnvollerweise umfasst der Leitungsspeicher ein kastenförmiges oder topfförmiges Gehäuse und der Leitungsstrang ist auf eine Bodenwand des kastenförmigen oder topfförmigen Gehäuses gelegt. Während einer Lageänderung der Schlaufe rutscht diese über die Bodenwand, wodurch auf bewegliche Teile und Spannelemente verzichtet werden kann.

Vorteilhafterweise ist das Federelement an dem Trägerelement mit einer vorderen Führungskonsole und/oder an dem Leitungsspeicher mit einer hinteren Führungskonsole befestigt. Die vordere und hintere Führungskonsole schwenken zusammen mit dem Federelement und reduzieren dadurch das Risiko von irreversiblen Knickstellen des Federelementes.

Besonders bevorzugt ist eine Ausführungsform, bei welcher die vordere und/oder hintere Führungskonsole mittels eines Schwenklagers um eine in Einbaulage vertikale Schwenkachse gelagert ist. Das Schwenklager der vorderen Führungskonsole kann insbesondere an dem Trägerelement angreifen und das Schwenklager der hinteren Führungskonsole an dem Gehäuse des Leitungsspeichers.

Gemäß einer weiteren Ausgestaltung sind an gegenüberliegenden Seiten der vorderen und/oder hinteren Führungskonsole nach außen auseinanderlaufende Führungselemente angeordnet. Bei einem besonders starken Ausschwenken des Trägerelementes legt sich das Federelement auf der Kurveninnenseite an das dort angeordnete Führungselement an, wodurch das Risiko von Knickstellen des Federelementes noch weiter verringert wird.

Günstigerweise stehen die Führungselemente in Einbaulage bezüglich der vorderen und/oder hinteren Führungskonsole nach hinten und/oder nach vorne über, das heißt in rückwärtiger Richtung bezogen auf die Vorwärtsfahrt des Sattelzuges. Einander zugewandte Innenseiten der Führungselemente können mit einer gegensinnigen Wölbung ausgebildet sein. Die Wölbung sollte zum Verhindern von Knickstellen des Federelementes möglichst kontinuierlich verlaufen.

Vorzugsweise umfasst der Leitungsstrang mehrere Versorgungsleitungen, die von mindestens einem Schutzschlauch umhüllt und/oder zusammengehalten sind. Der Schutzschlauch schützt die Versorgungsleitungen vor mechanischen Beschädigungen, insbesondere wenn diese ständig eine rutschende Bewegung gegenüber dem Federelement und dem Gehäuse, beispielsweise auf dessen Bodenwand, vollziehen. Besonders günstig ist eine Ausführung des Schutzschlauches mit einer Oberfläche, die für einen besonders günstigen Reibungskoeffizienten sorgt. Dieses wiederum reduziert den Verschleiß und ermöglicht eine besonders gleichmäßige Gleitbewegung des Leitungsstranges in den und aus dem Leitungsspeicher.

Zweckmäßigerweise ist an dem Trägerelement ein Trägerelement-Steckerelement und/oder an oder benachbart zu dem Leitungsspeicher ein Leitungsspeicher-Steckerelement vorgesehen. Mit Hilfe des Trägerelement-Steckerelementes ist eine elektrische, pneumatische und gegebenenfalls auch hydraulische Anbindung mit dem Versorgungskreislauf des Zugfahrzeugs möglich. Häufig wird das Trägerelement-Steckerelement als Stecker ausgebildet sein und das dazu komplementäre Bauteil des Zugfahrzeugs aus Sicherheitsgründen als Buchse, da dieses stromführend ist. Das Trägerelement-Steckerelement wird bei jedem An- und Abkuppelvorgang verbunden oder gelöst. Das Leitungsspeicher-Steckerelement ermöglicht eine Anbindung der Leitungsführungsvorrichtung an das Bordnetz des Sattelaufliegers, typischerweise über ein komplementäres Steckerbauteil des Sattelaufliegers, und wird regelmäßig als Buchse ausgeführt sein, da dieses stromführend ist. Im Regelfall erfolgt eine Trennung des Leitungsspeicher-Steckerelementes lediglich für Reparatur- und Wartungszwecke.

Vorteilhafterweise ist das Trägerelement ein an einem Sattelauflieger befestigbarer Keilschwenkrahmen oder eine an einem Anhänger befestigbare Steckerkonsole. Der Leitungsspeicher ist dann zusammen mit automatisierten Kupplungssystemen für die Verbindung der Versorgungsleitungen des Sattelaufliegers oder Anhängers an das Zugfahrzeug vorgesehen.

Die Erfindung erstreckt sich auch auf eine Kombination einer vorstehend erläuterten Leitungsführungsvorrichtung mit einem als Sattelauflieger ausgebildeten Fahrzeug, wobei das Trägerelement ein um einen Königszapfen schwenkbarer Keilschwenkrahmen ist.

Sinnvollerweise ist der Leitungsspeicher unter einem Aufliegerboden des Sattelaufliegers angeordnet. Diese Einbaulage ermöglicht einen direkten Zugriff für Montage- und Reparaturzwecke. Überdies kann der Leitungsspeicher und die gesamte Leitungsführungsvorrichtung ohne größere strukturelle Modifikationen des Sattelaufliegers angebaut werden.

Besonders bevorzugt ist eine Ausführungsform, bei welcher der Leitungsspeicher an einer Unterseite eines Aufliegerbodens oder an einem Chassis-Bauteil oder an einem Anbauteil des Sattelaufliegers, wie zum Beispiel den Stützwinden, befestigt ist. Unter einem Chassis-Bauteil wird insbesondere ein Längsträger oder Querträger des Fahrzeugrahmens vom Sattelauflieger oder die Anbaukonsolen für die Stützwinden verstanden.

Die Schlaufe des Leitungsstranges kann einen in den Leitungsspeicher einlaufenden und einen abgehenden Abschnitt aufweisen, die beide in Richtung einer Front des Sattelaufliegers ausgerichtet sind. Die konkave Seite der Schlaufe ist der Front des Sattelaufliegers zugewandt.

Gemäß einer alternativen Ausführungsform kann das Fahrzeug auch ein Anhänger und das Trägerelement eine beweglich zu einer Deichsel gelagerte Steckerkonsole sein. Die Steckerkonsole schwenkt im Fahrbetrieb beispielsweise beim Durchfahren einer Kurve regelmäßig mit einer komplementär ausgeformten, zugfahrzeugseitigen Steckerbuchse, in welche sie eingesteckt ist. Diese Schwenkbewegung erfordert ein Mitführen des Leitungsstranges seitens des Anhängers, wobei der Leitungsstrang in einer Kurvenfahrt-Stellung weiter aus dem Leitungsspeicher herausgezogen ist als in einer Geradeausfahrt-Stellung. Meistens ist die Steckerkonsole schwenkbar zu der Deichsel des Anhängers gelagert.

Günstigerweise ist der Leitungsspeicher an oder ortsfest zu der Deichsel des Anhängers befestigt.

Gemäß einer noch weiteren Ausführungsform ist das Fahrzeug als Gelenkfahrzeug ausgebildet und weist einen von einem Drehgelenk voneinander getrennten ersten sowie zweiten Fahrzeugteil auf. Das Trägerelement ist dabei eine an dem ersten Fahrzeugteil angeordnete Sammelkonsole und der Leitungsspeicher ist vorzugsweise ortsfest zu dem zweiten Fahrzeugteil befestigt. Mit Hilfe des Leitungsspeichers lässt sich eine weitgehend durchhangfreie Verbindung des Leitungsstranges zu der relativ beweglichen Sammelkonsole des ersten Fahrzeugteils realisieren, unabhängig von der Knickstellung des ersten und zweiten Fahrzeugteils zueinander.

Zum besseren Verständnis wird die Erfindung nachfolgend anhand von 12 Figuren erläutert. Es zeigen die
- **Fig. 1:**: eine Seitenansicht auf ein Fahrzeug in Form eines Sattelaufliegers mit daran angeordneter Leitungsführungsvorrichtung;
- **Fig. 2:**: eine Draufsicht auf eine Sattelkupplung mit eingefahrenem Trägerelement als Keilschwenkrahmen und Leitungsführungsvorrichtung in Geradeausfahrt-Stellung;
- **Fig. 3:**: eine Draufsicht gemäß Fig. 2 in Kurvenfahrt-Stellung;
- **Fig. 4:**: eine Draufsicht auf Keilschwenkrahmen, Leitungsstrang mit Federelement und abgedeckten Leitungsspeicher in Geradeausfahrt-Stellung;
- **Fig. 5:**: eine perspektivische Ansicht auf einen abgedeckten Leitungsspeicher mit darin befindlichem Leitungsstrang und angeschlossenem Federelement in Geradeausfahrt-Stellung;
- **Fig. 6:**: eine Draufsicht auf einen abgedeckten Leitungsspeicher mit darin befindlichem Leitungsstrang in Kurvenfahrt-Stellung;
- **Fig. 7:**: einen Längsschnitt durch einen Leitungsstrang mit Federelement und daran befestigter vorderer und hinterer Führungskonsole;
- **Fig. 8:**: eine perspektivische Ansicht auf eine vordere oder hintere Führungskonsole;
- **Fig. 9:**: einen Längsschnitt durch ein an der vorderen oder hinteren Führungskonsole befestigtes Federelement;
- **Fig. 10:**: eine perspektivische Ansicht auf ein Gehäuse des Leitungsspeichers mit hinterer Führungskonsole und Leitungsspeicher-Steckerelement;
- **Fig. 11:**: eine perspektivische Ansicht auf eine Deichsel eines Anhängers mit daran montiertem Leitungsspeicher und einem Trägerelement in Form einer Steckerkonsole und
- **Fig. 12:**: eine Draufsicht auf ein Gelenkfahrzeug mit einem am ersten Fahrzeugteil montierten Trägerelement in Form einer Sammelkonsole und dem am zweiten Fahrzeugteil montierten Leitungsspeicher.

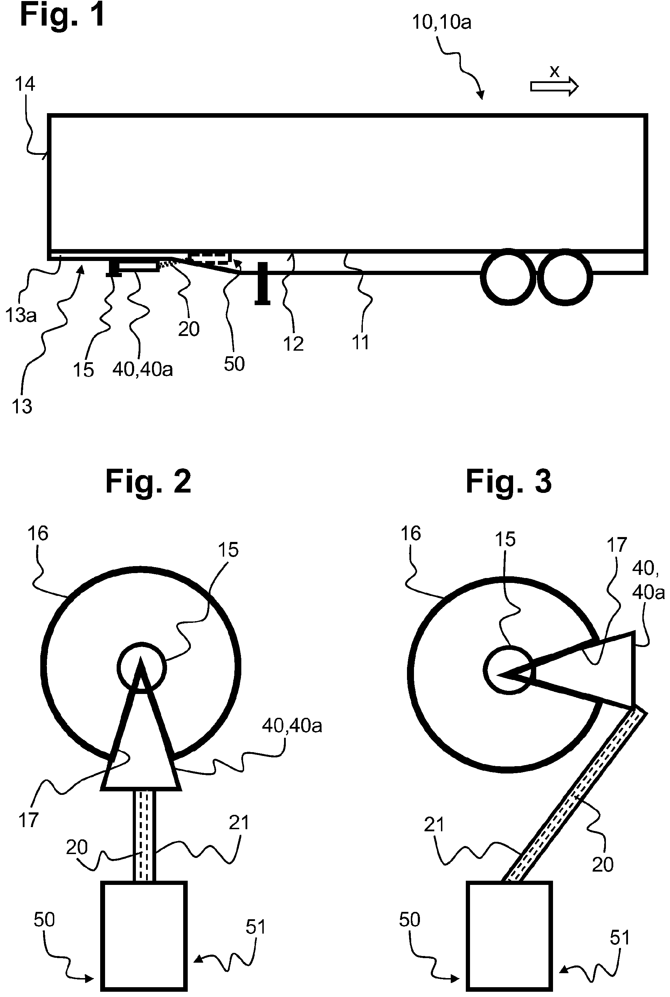

Die Fig. 1 zeigt eine Seitenansicht eines Fahrzeugs 10 in Form eines Sattelaufliegers 10a, der mittels eines gegenüber einer Unterseite 12 eines Aufliegerbodens 11 nach unten vorstehenden Königszapfens 15 an eine schematisch in Fig. 2 und Fig. 3 dargestellte Sattelkupplung 16 eines hier nicht weiter gezeigten Zugfahrzeugs einfahrbar und mit der Sattelkupplung 16 verriegelbar ist. Die Sattelkupplung 16 weist an ihrem dem Sattelauflieger 10a während des Ankuppelns zugewandten Ende eine V-förmig aufgeweitete Einfahröffnung 17 auf, durch welche der Königszapfen 15 während einer weiteren Annäherung von Zugfahrzeug und Sattelauflieger 10a seitlich geführt ist und schließlich in seiner Endlage verriegelt wird.

Der Königszapfen 15 befindet sich in einem der Front 14 des Sattelaufliegers 10a benachbarten Abschnitt. Typischerweise ist der Aufliegerboden 11 durch zwei in der Fahrzeuglängsachse verlaufende Längsträger 13a abgestützt, die mit weiteren, aus Übersichtsgründen weggelassenen Querträgern, Chassis-Bauteile 13 bilden.

Ein Trägerelement 40 in Form eines Keilschwenkrahmens 40a ist an dem Sattelauflieger 10a schwenkbar um den Königszapfen 15 gelagert, über welchen insbesondere bei einem automatischen Ankuppelvorgang eine elektrische und pneumatische Verbindung zu dem Zugfahrzeug hergestellt wird.

Mit dem Einfahren des Königszapfens 15 in die Sattelkupplung 16 gelangt auch der Keilschwenkrahmen 40a in die Einfahröffnung 17 der Sattelkupplung 16 und stützt sich darin aufgrund seiner zur Einfahröffnung 17 komplementären Form seitlich ab.

Von dem Keilschwenkrahmen 40a verläuft ein Leitungsstrang 20 in rückwärtiger Richtung x des Sattelaufliegers 10a zu einem ortsfest an dem Aufliegerboden 11 oder einem der Chassis-Bauteile 13 befestigten Leitungsspeicher 50. Der Leitungsspeicher 50 nimmt in Abhängigkeit einer Relativposition des Sattelaufliegers 10a zu der Sattelkupplung 16 einen Teil des Leitungsstranges 20 auf beziehungsweise gibt einen Teil des Leitungsstranges 20 frei, wodurch ein Durchhängen des Leitungsstranges 20 während einer Geradeausfahrt vermieden wird.

Eine Geradeausfahrt-Stellung von Zugfahrzeug und Sattelauflieger 10a ist in Fig. 2 zu erkennen. Der Keilschwenkrahmen 40a, der Leitungsstrang 20 und der Leitungsspeicher 50 fluchten im Wesentlichen in der Fahrzeuglängsachse des Sattelaufliegers 10a. In dieser Position ist von dem Leitungsstrang 20 ein vergleichsweise geringer Abstand zwischen dem Keilschwenkrahmen 40a und dem Leitungsspeicher 50 zu überbrücken. Der Leitungsstrang 20 ist aufgrund seiner Formsteifigkeit teilweise von dem Keilschwenkrahmen 40a in den Leitungsspeicher 50 hineingedrückt worden. Zwischen dem Keilschwenkrahmen 40a und dem Leitungsspeicher 50 ist ein Federelement 21 angeordnet, welches den Leitungsstrang 20 über die gesamte Distanz umhüllt. Das Federelement 21 weist zwischen dem Keilschwenkrahmen 40a und dem Leitungsspeicher 50 seine kürzeste axiale Länge auf.

Die Fig. 3 zeigt eine extreme Kurvenfahrt-Stellung, wie sie insbesondere beim Rangieren vorkommen kann. Der Keilschwenkrahmen 40a ist entgegen dem Uhrzeigersinn um ungefähr 90° ausgeschwenkt und hat einen Teil des Leitungsstranges 20 aus dem Leitungsspeicher 50 herausgezogen. Der Leitungsspeicher 50 verhindert hierdurch ein Abreißen des Leitungsstranges 20 von dem Keilschwenkrahmen 40a. Das Federelement 21 hat seine axiale Länge aufgrund des vom Keilschwenkrahmens 40a vollzogenen Schwenkweges entsprechend verlängert. Die Bewegung des Leitungsstranges 20 findet jedoch unabhängig von der Dehnung des Federelementes 21 statt, da diese nicht miteinander verbunden sind. Der Leitungsstrang 20 liegt lediglich mit seiner Gewichtskraft auf dem Federelement 21 auf, ist jedoch sonst kinematisch nicht mit dem Federelement 21 gekoppelt.

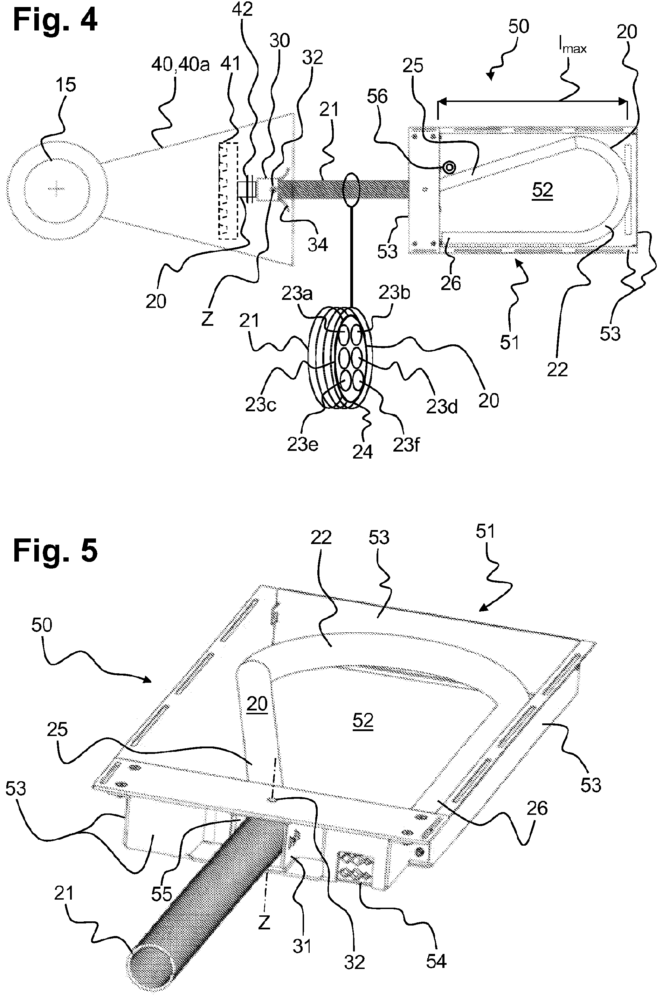

In der Fig. 4 ist der Keilschwenkrahmen 40a in einer Geradeausfahrt-Stellung ausgerichtet. In angekuppelten Zustand des Sattelaufliegers mit einem Zugfahrzeug ist ein Keilschwenkrahmen-Steckerelement 41 mit einem komplementären Steckerelement des Zugfahrzeugs verbunden, wodurch mindestens eine elektrische und pneumatische Verbindung hergestellt ist. Das Keilschwenkrahmen-Steckerelement 41 ist elektrisch mit dem Leitungsstrang 20 verbunden, der insgesamt sechs Versorgungsleitungen 23a, 23b, 23c, 23d, 23e, 23f umfasst, von denen vier Versorgungsleitungen 23a, 23b, 23c, 23d als elektrische Leitungen und zwei Versorgungsleitungen 23e, 23f als pneumatische Leitungen ausgebildet sind. Die stets mehreren Versorgungsleitungen 23a, 23b, 23c, 23d, 23e, 23f sind zusammen in einen Schutzschlauch 24 eingesetzt, der neben einer mechanischen Schutzfunktion der Versorgungsleitungen 23a, 23b, 23c, 23d, 23e, 23f auch eine besonders glatte Oberfläche aufweist, welche die Gleitreibung zwischen dem Leitungsstrang 20 und einem diesen umgebenden Federelement 21 reduziert.

Das Federelement 21 ist in dem gezeigten Ausführungsbeispiel eine zylindrische Schraubenfeder, die sowohl an dem Keilschwenkrahmen 40a als auch dem Leitungsspeicher 50 mit ihren Endabschnitten befestigt ist. In der Geradeausfahrt-Stellung befindet sich das Federelement 21 in einer zusammengezogenen, kurzen Stellung. Der Leitungsstrang 20 verläuft lose durch den Innenraum des Federelementes 21 und liegt lediglich mit seiner Unterseite schwerkraftbelastet auf dem Federelement 21 auf. Der Leitungsstrang 20 ist an dem Keilschwenkrahmen 40a mit Hilfe eines Zugentlastungsmittels 42 befestigt, um Zugkräfte des Leitungsstranges 20 von der dauerhaften Verbindung mit dem Keilschwenkrahmen-Steckerelement 41 fernzuhalten.

Wie besonders gut in der Fig. 4 und Fig. 5 zu erkennen ist, umfasst der Leitungsspeicher 50 ein kastenförmiges Gehäuse 51 mit einer Bodenwand 52 und darauf aufragenden Seitenwänden 53, die in der montierten Position gemäß Fig. 1 stirnseitig an dem Aufliegerboden 11 oder einem Chassis-Bauteil 13 anliegen. Das Federelement 21 ist mittig auf der dem Keilschwenkrahmen 40a zugewandten Seitenwand 53 des Gehäuses 51 befestigt und der Leitungsstrang 20 tritt mit seinem einlaufenden Abschnitt 25 durch eine in der Seitenwand 53 ausgeformten Öffnung 55 (siehe Fig. 5) in das Gehäuse 51 ein. Für einen besonders geschmeidiges Ein- und Auslaufen des Leitungsstranges 20 in und aus dem Leitungsspeicher 50 ist innerhalb des Gehäuses 51 seitlich versetzt und benachbart zu der Öffnung 55 eine Stützrolle 56 drehbar gelagert, die insbesondere bei einer ausziehenden Bewegung des einlaufenden Abschnittes 55 dessen gleichmäßige Bewegung gewährleistet.

Innerhalb des Gehäuses 51 des Leitungsspeichers 50 ist der Leitungsstrang 20 in einer einzigen Schlaufe 22 in einer Ebene abgelegt, insbesondere auf der Bodenwand 52 des Gehäuses 51.

In der Geradeausfahrt-Stellung des Keilschwenkrahmens 40a weist die Schlaufe 22 eine maximale Länge Iₘₐₓ auf. Ein abgehender Abschnitt 26 des Leitungsstranges 20 ist an ein Leitungsspeicher-Steckerelement 54 angeschlossen, über welches wiederum der Leitungsspeicher 50 an das Bordnetz des Sattelaufliegers 10a anschließbar ist. Das Leitungsspeicher-Steckerelement 54 ist ebenfalls in die dem Keilschwenkrahmen 40a zugewandte Seitenwand 53 des Gehäuses 51 eingesetzt. In der Geradeausfahrt-Stellung liegen der einlaufende Abschnitt 25 und der abgehende Abschnitt 26 auf gegenüberliegenden Seiten der Bodenwand 52, benachbart zu ihrer nächstgelegenen Seitenwand 53.

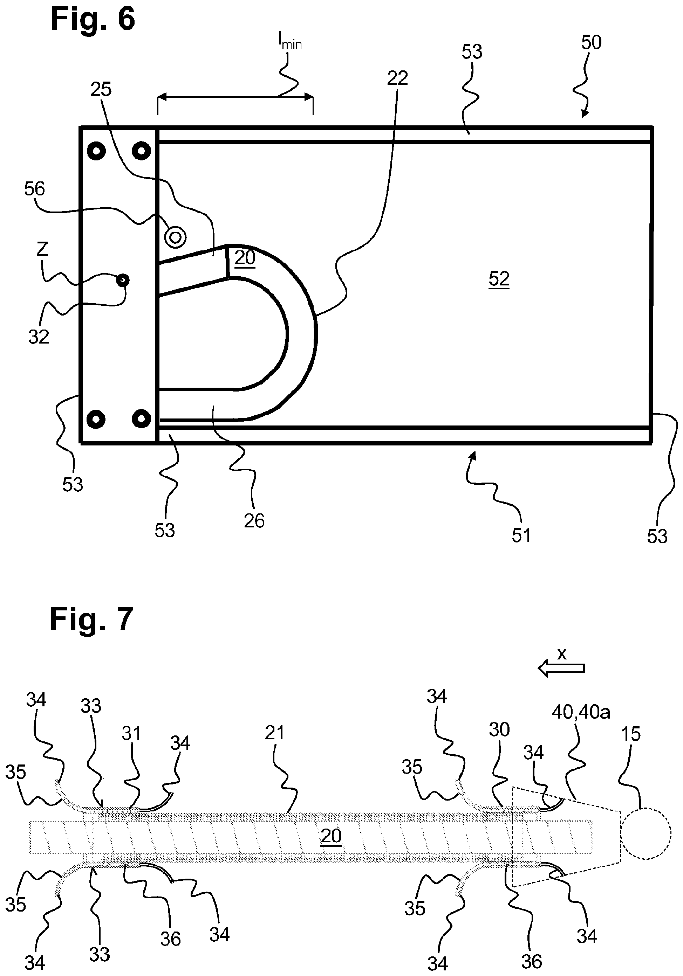

Die Fig. 6 verdeutlicht eine aus dem Leitungsspeicher 50 herausgezogene Situation des Leitungsstranges 20 in einer Kurvenfahrt-Stellung, bei welcher die Schlaufe 22 in der Bildebene nach links in Richtung der dem Keilschwenkrahmen 40a zugewandten Seitenwand 53 gewandert ist. Der Radius der Schlaufe 22 hat sich verringert, ebenso wie die Länge, welche nunmehr eine minimale Schlaufenlänge Iₘᵢₙ eingenommen hat.

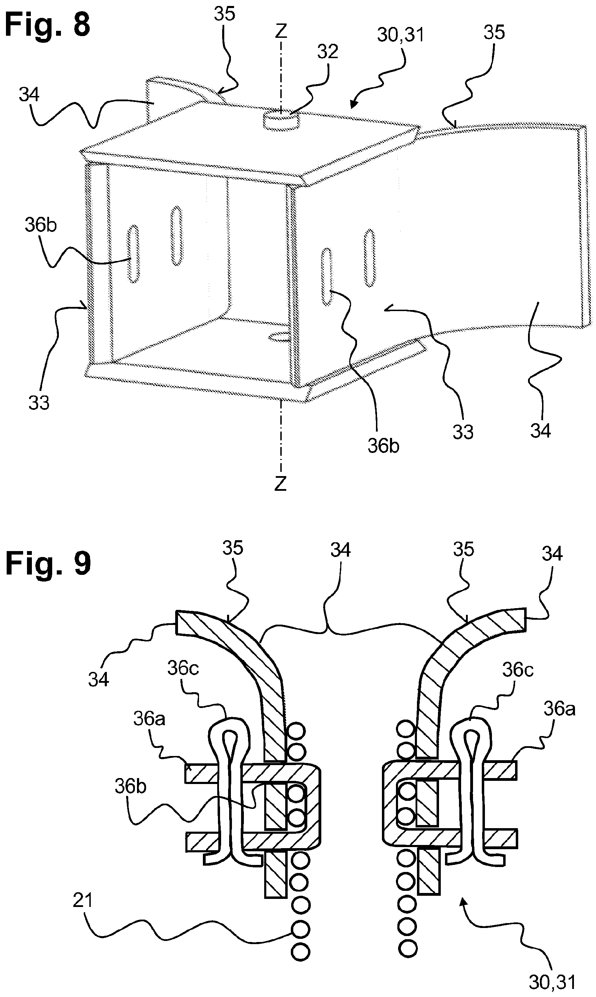

Die Fig. 7 zeigt einen Längsschnitt des Leitungsstranges 20 mit dem diesen umgebenden Federelement 21. Das Federelement 21 ist mittels einer vorderen Führungskonsole 30 an dem Keilschwenkrahmen 40a und mittels einer hinteren Führungskonsole 31 an dem Gehäuse 51 des Leitungsspeichers 50 befestigt. Die vordere Führungskonsole 30 ist baugleich mit der hinteren Führungskonsole 31 ausgeführt. Die vordere und hintere Führungskonsole 30, 31 sind jeweils mit Hilfe eines Schwenklagers 32 um eine vertikale Schwenkachse Z gelagert (vergleiche Fig. 8). Das Schwenklager 32 der vorderen Führungskonsole 30 greift an dem Keilschwenkrahmen 40a an. Die hintere Führungskonsole 31 ist in die Öffnung 55 des Gehäuses 51 vom Leitungsspeicher 50 eingesetzt und mittels des zugehörigen Schwenklagers 32 gegenüber dem Gehäuse 51 gelagert.

Darüber hinaus sind an gegenüberliegenden Seiten 33 der vorderen und hinteren Führungskonsolen 30, 31 Führungselemente 34 ausgebildet, die in rückwärtiger Richtung x seitlich sowie nach außen geschwungen sind und gegenüber den Führungskonsolen 30, 31 vorstehen. In der Draufsicht vollzieht jedes Führungselement 34 beziehungsweise dessen Innenseite 35 der vorderen oder hinteren Führungskonsole 30, 31 ein Bogenmaß von ungefähr 90°, gegenüberliegend mit gegensätzlichem Richtungssinn. An der vorderen und hinteren Führungskonsole 30, 31 sind außerdem entgegen der rückwärtigen Richtung x paarweise seitlich sowie nach außen geschwungene Führungselemente 34 vorgesehen.

In einer Geradeausfahrt-Stellung des Keilschwenkrahmens 40a sind die Führungselemente 34 beabstandet zu dem Federelement 21 angeordnet und insofern ohne Funktion. Sobald jedoch eine Kurvenfahrt-Stellung eintritt, wandert der Keilschwenkrahmen 40a relativ zu dem Leitungsspeicher 50 seitlich nach außen und das Federelement 21 wäre im Bereich des Keilschwenkrahmens 40a oder aber im Bereich der Öffnung 55 des Gehäuses 51 einer mithin irreversiblen Knickbelastung unterworden. Mit Hilfe der vorderen und hinteren Führungskonsole 30, 31 dreht sich diese zunächst zusammen mit der Befestigung des Federelementes 21 mit. Bei einer noch engerer Kurvenfahrt-Stellung schmiegt sich das Federelement 21 an die kurveninnere Innenseite 35 des jeweiligen Führungselementes 34 an, wodurch eine Knickbelastung weitgehend vermieden wird.

Die Fig. 8 zeigt in einer vergrößerten perspektivischen Ansicht eine vordere oder hintere Führungskonsole 30, 31 und Fig. 9 dessen beispielhafte Befestigung an dem Federelement 21 mittels eines Federelementbefestigungsmittels 36. Das Federelementbefestigungsmittel 36 umfasst in den gegenüberliegenden Seiten 33 der vorderen oder hinteren Führungskonsole 30, 31 ausgebildete Bügelöffnungen 36b, durch welche ein U-förmiger Bügel 36a hindurchgesteckt und insbesondere mit einem Sicherungssplint 36c gegen Verlust gesichert ist. Der Bügel 36a kann beispielsweise von innen zunächst durch die Windungen des Federelementes 21 und dann durch die Bügelöffnungen 36b eingesetzt sein. Der zugehörige Sicherungssplint 36c durchsetzt die freien Schenkel des Bügels 36a außerhalb der vorderen oder hinteren Führungskonsole 30, 31.

Es ist ebenso möglich, die beiden Enden des Bügels 36a mit einem Gewinde zu versehen, anstelle der Verwendung eines Sicherungssplintes 36 jeweils eine Mutter auf das Gewinde aufzuschrauben und den Bügel 36a auf diese Weise vorzuspannen, so dass das Federelement 21 von innen gegen die Wandung der vorderen oder hinteren Führungskonsole 30, 31 gedrückt wird und dort klemmend gehalten ist.

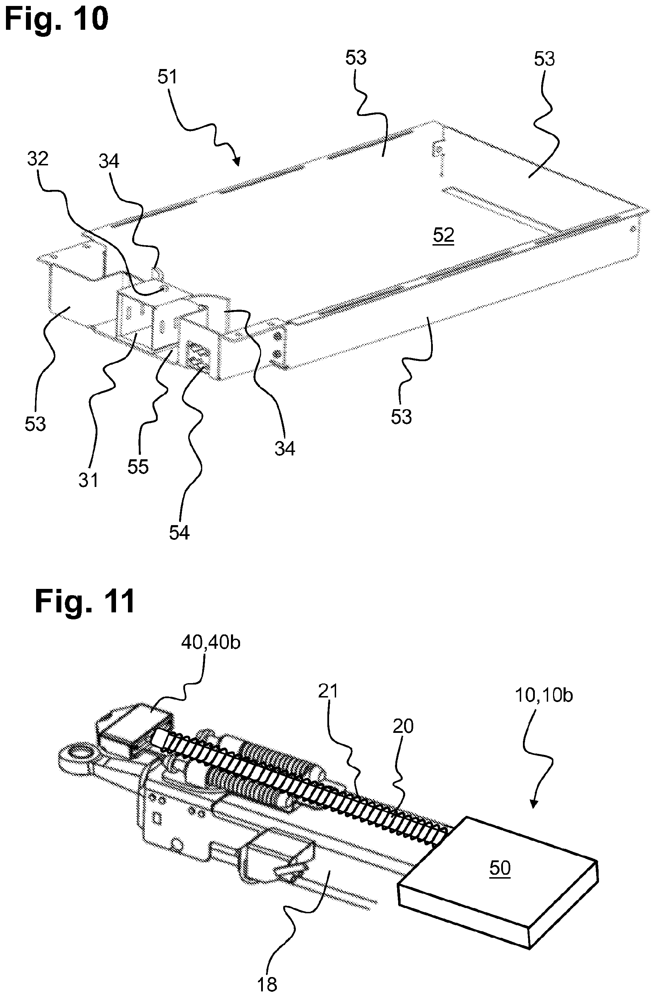

In der Fig. 10 ist das Gehäuse 51 des Leitungsspeichers 50 in einer perspektivischen Darstellung zu erkennen. In der dem Keilschwenkrahmen 40a zugewandten Seitenwand 53 befindet sich in einer mittleren Position die Öffnung 50, in welche die hintere Führungskonsole 31 eingesetzt ist, durch welche wiederum der Leitungsstrang 20 in den Leitungsspeicher 50 eintritt. Unmittelbar seitlich neben der Öffnung 50 und neben der hinteren Führungskonsole 31 ist in dieselbe Seitenwand 53 das Leitungsspeicher-Steckerelement 54 eingesetzt, mit Hilfe dessen der Leitungsspeicher 50 an das Bordnetz des Sattelaufliegers 10a angeschlossen werden kann.

Die Fig. 11 zeigt das vordere Ende eines Fahrzeugs 10 in Form eines Anhängers 10b, welcher mittels einer Deichsel 18 an ein hier nicht gezeigtes Zugfahrzeug ankuppelbar ist. Auf der Oberseite der Deichsel 18 ist ein Trägerelement 40 als Steckerkonsole 40b angeordnet, die zur Herstellung einer elektrischen und pneumatischen Verbindung in eine komplementär ausgeformten Steckerbuchse des Zugfahrzeugs eingesteckt wird. Die Steckerkonsole 40b ist gegenüber der Deichsel 18 um ihre vertikale Achse verschwenkbar, um bei Kurvenfahrt mit der Steckerbuchse des Zugfahrzeugs mitschwenken zu können und eine stetige Verbindung der Steckkonsole 40b mit der zugfahrzeugseitigen Steckerbuchse zu gewährleisten.

Die Lageänderung der Steckerkonsole 40b bezüglich der Deichsel 18 wird mittels des ortsfest an der Deichsel 18 angebrachten Leitungsspeichers 50 kompensiert, in welchen der an der Steckerkonsole 40b angreifende Leitungsstrang 20 hineinläuft. Der Leitungsspeicher 50 entspricht baulich der der in den Fig. 1 bis Fig. 10 erläuterten Bauausführung.

Der Leitungsstrang 20 ist auch bei dieser Ausführungsform in Umfangsrichtung vollständig von dem Federelement 21 umgeben, welches sowohl an der Steckerkonsole 40b als auch dem Leitungsspeicher 50 befestigt ist. Mit Hilfe des Federelementes 21 ist der Leitungsstrang 20 in axialer Richtung geführt, kann bei Kurvenfahrten aus dem Leitungsspeicher 50 entweichen und sich bei Geradeausfahrt aufgrund seiner Biegesteifigkeit in den Leitungsspeicher 50 zurückschieben. In der Darstellung der Fig. 11 befindet sich das Trägerelement 10 in Form der Steckerkonsole 40b in einer Geradeausfahrt-Stellung, in welcher das Federelement 21 zusammengezogen und ein maximaler Abschnitt des Leitungsstranges 20 von dem Leitungsspeicher 50 aufgenommen ist.

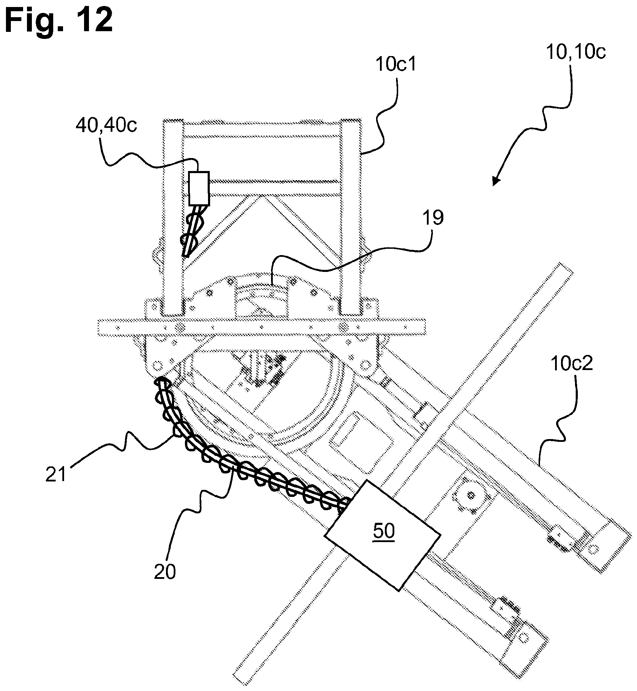

Die Fig. 12 verdeutlicht in einem weiteren Ausführungsbeispiel die Anbringung der Leitungsführungsvorrichtung an einem Fahrzeug 10 in Form eines Gelenkfahrzeugs 10c beziehungsweise an dessen Rahmenbauteilen. Das Gelenkfahrzeug 10c weist ein erstes Fahrzeugteil 10c1 und ein zweites Fahrzeugteil 10c2 auf, die über ein dazwischen angeordnetes Drehgelenk 19 miteinander verbunden sind. Das Gelenkfahrzeug 10c befindet sich in der Darstellung der Fig. 12 in einer Kurvenfahrt-Stellung, in welcher das erste Fahrzeugteil 10c1 zu dem zweiten Fahrzeugsteil 10c2 an dem Drehgelenk zueinander abgewinkelt sind.

Der Leitungsstrang 20 verläuft von dem ersten Fahrzeugteil 10c1 über das Drehgelenk 19 zu dem zweiten Fahrzeugteil 10c2. Da sich die Relativlage von erstem und zweitem Fahrzeugsteil 10c1, 10c2 im Fahrbetrieb permanent ändert, ist es notwendig, auch den Leitungsstrang 20 an die jeweilige Knickstellung von erstem und zweiten Fahrzeugteil 10c1, 10c2 anzupassen. Diese Anpassung erfolgt mittels des Leitungsspeichers 50. Der Leitungsstrang 20 ist an dem Trägerelement 40 in Form einer Sammelkonsole 40c befestigt, einseitig auf den äußeren Umfang des Drehgelenkes 19 aufgelegt und verläuft von dort in den Leitungsspeicher 50. Über den gesamten Verlauf von dem Leitungsspeicher 50 zu der Sammelkonsole 40c ist der Leitungsstrang 20 von dem Federelement 21 aufgenommen und darin lose abgelegt. Aufgrund der Knickstellung von erstem und zweitem Fahrzeugteil 10c1, 10c2 befindet sich das Federelement 21 in einer gedehnten Stellung, die während des Zurückkehrens in die Geradeausfahrt-Stellung aufgehoben wird.

Auch bei dieser Ausführungsform gelangt der Leitungsstrang abschnittsweise ausschließlich aufgrund seiner Biegesteifigkeit aus und in den Leitungsspeicher, kinematisch entkoppelt von dem Federelement 21, welches lediglich den Leitungsstrang 21 abstützt und vor einem Durchhängen bewahrt.

### Bezugszeichenliste

- 10: Fahrzeug
- 10a: Sattelauflieger
- 10b: Anhänger
- 10c: Gelenkfahrzeug
- 10c1: erster Fahrzeugteil Gelenkfahrzeug
- 10c2: zweiter Fahrzeugteil Gelenkfahrzeug
- 11: Aufliegerboden
- 12: Unterseite
- 13: Chassis-Bauteil
- 13a: Längsträger
- 14: Front Sattelauflieger
- 15: Königszapfen
- 16: Sattelkupplung
- 17: Einfahröffnung Sattelkupplung
- 18: Deichsel
- 19: Drehgelenk
- 20: Leitungsstrang
- 21: Federelement
- 22: Schlaufe
- 23a-f: Versorgungsleitungen
- 24: Schutzschlauch
- 25: einlaufender Abschnitt
- 26: abgehender Abschnitt
- 30: vordere Führungskonsole
- 31: hintere Führungskonsole
- 32: Schwenklager
- 33: gegenüberliegende Seiten Führungskonsole
- 34: Führungselemente
- 35: Innenseite Führungselement
- 36: Federelementbefestigungsmittel
- 36a: Bügel
- 36b: Bügelöffnungen
- 36c: Sicherungssplint
- 40: Trägerelement
- 40a: Keilschwenkrahmen
- 40b: Steckerkonsole
- 40c: Sammelkonsole
- 41: Trägerelement oder Keilschwenkrahmen-Steckerelement
- 42: Zugentlastungsmittel Leitungsstrang
- 50: Leitungsspeicher
- 51: Gehäuse
- 52: Bodenwand Gehäuse
- 53: Seitenwände Gehäuse
- 54: Leitungsspeicher-Steckerelement
- 55: Öffnung
- 56: Stützrolle
- Iₘₐₓ: maximale Schlaufenlänge
- Iₘᵢₙ: minimale Schlaufenlänge
- x: rückwärtige Richtung
- Z: Schwenkachse Führungskonsole

## Patentansprüche

1. Leitungsführungsvorrichtung für eine Anbindung eines Leitungsstranges (20) an ein zum Fahrzeug (10) bewegliches Trägerelement (40), wobei die Leitungsführungsvorrichtung das schwenkbar am Fahrzeug befestigte Trägerelement (40) und einen Leitungsspeicher (50) aufweist, in welchem zumindest ein Teil des Leitungsstranges (20) untergebracht ist,
wobei zwischen dem Trägerelement (40) und dem Leitungsspeicher (50) ein Federelement (21) angeordnet ist, **dadurch gekennzeichnet, dass** der Leitungsstrang (20) von dem Federelement (21) lose getragen ist, und der Leitungsstrang (20) von dem Federelement (21) derart gestützt ist, dass für eine axiale Bewegung lediglich die aus seiner Gewichtskraft resultierende Gleitreibung zu überwinden ist.

2. Leitungsführungsvorrichtung nach Anspruch 1, **dadurch gekennzeichnet, dass** das Federelement an dem Trägerelement (40) und/oder an dem Leitungsspeicher (50) befestigt ist.

3. Leitungsführungsvorrichtung nach Anspruch 1 oder 2, **dadurch gekennzeichnet, dass** der Leitungsstrang (20) in dem Leitungsspeicher (50) als eine Schlaufe (22) eingelegt ist.

4. Leitungsführungsvorrichtung nach Anspruch 3, **dadurch gekennzeichnet, dass** unabhängig von der Relativposition des Trägerelementes (40) der Richtungssinn der Schlaufe (22) stets gleich ist.

5. Leitungsführungsvorrichtung nach Anspruch 3 oder 4, **dadurch gekennzeichnet, dass** in einer Geradeausfahrt-Stellung des Trägerelementes (40) die Schlaufe (22) innerhalb des Leitungsspeichers (50) eine maximale Schlaufenlänge (Iₘₐₓ) aufweist.

6. Leitungsführungsvorrichtung nach einem der Ansprüche 3 bis 5, **dadurch gekennzeichnet, dass** in einer Kurvenfahrt-Stellung des Trägerelementes (40) die Schlaufe (22) innerhalb des Leitungsspeichers (50) eine minimale Schlaufenlänge (Iₘᵢₙ) aufweist.

7. Leitungsführungsvorrichtung nach einem der Ansprüche 1 bis 6, **dadurch gekennzeichnet, dass** das Federelement (21) an dem Trägerelement (40) mit einer vorderen Führungskonsole (30) und/oder an dem Leitungsspeicher (50) mit einer hinteren Führungskonsole (31) befestigt ist.

8. Leitungsführungsvorrichtung nach Anspruch 7, **dadurch gekennzeichnet, dass** die vordere und/oder hintere Führungskonsole (30, 31) mittels eines Schwenklagers (32) um eine in Einbaulage vertikale Schwenkachse (Z) gelagert ist.

9. Leitungsführungsvorrichtung nach Anspruch 7 oder 8, **dadurch gekennzeichnet, dass** an gegenüberliegenden Seiten (33) der vorderen und/oder hinteren Führungskonsole (30, 31) nach außen auseinanderlaufende Führungselemente (34) angeordnet sind.

10. Leitungsführungsvorrichtung nach Anspruch 9, **dadurch gekennzeichnet, dass** die Führungselemente (34) in Einbaulage bezüglich der vorderen und/oder hinteren Führungskonsole (30, 31) nach hinten und/oder vorne überstehen.

11. Leitungsführungsvorrichtung nach Anspruch 9 oder 10, **dadurch gekennzeichnet, dass** einander zugewandte Innenseiten (35) der Führungselemente (34) mit einer gegensinnigen Wölbung ausgebildet sind.

12. Leitungsführungsvorrichtung nach einem der Ansprüche 1 bis 11, **dadurch gekennzeichnet, dass** der Leitungsstrang (20) mehrere Versorgungsleitungen (23a, 23b, 23c, 23d, 23e, 23f) umfasst, die von mindestens einem Schutzschlauch (24) umhüllt und/oder zusammengehalten sind.

13. Leitungsführungsvorrichtung nach einem der Ansprüche 1 bis 12, **dadurch gekennzeichnet, dass** an dem Trägerelement (40) ein Trägerelement-Steckerelement (41) und/oder an oder benachbart zu dem Leitungsspeicher (50) ein Leitungsspeicher-Steckerelement (54) vorgesehen ist.

14. Kombination einer Leitungsführungsvorrichtung nach einem der Ansprüche 1 bis 13 mit einem als Sattelauflieger (10a) ausgebildeten Fahrzeug (10), **dadurch gekennzeichnet, dass** das Trägerelement (40) ein um einen Königszapfen (15) schwenkbarer Keilschwenkrahmen (40a) ist.

15. Kombination nach Anspruch 14, **dadurch gekennzeichnet, dass** der Leitungsspeicher (50) unter einem Aufliegerboden (11) des Sattelaufliegers (10a) angeordnet ist.

16. Kombination nach Anspruch 14 oder 15, **dadurch gekennzeichnet, dass** der Leitungsspeicher (50) an einer Unterseite des Aufliegerbodens (11), einem Chassis-Bauteil (13) oder einem Anbauteil des Sattelaufliegers (10a) befestigt ist.

17. Kombination einer Leitungsführungsvorrichtung nach einem der Ansprüche 1 bis 13 mit einem als Anhänger (10b) ausgebildeten Fahrzeug (10), **dadurch gekennzeichnet, dass** das Trägerelement (40) eine beweglich zu einer Deichsel (18) gelagerte Steckerkonsole (40b) ist.

18. Kombination nach Anspruch 17, **dadurch gekennzeichnet, dass** der Leitungsspeicher (50) an oder ortsfest zu der Deichsel (18) des Anhängers (10b) befestigt ist.

19. Kombination einer Leitungsführungsvorrichtung nach einem der Ansprüche 1 bis 13 mit einem als Gelenkfahrzeug (10c) ausgebildeten Fahrzeug (10), wobei das Gelenkfahrzeug (10c) einen von einem Drehgelenk (19) voneinander getrennten ersten sowie zweiten Fahrzeugteil (10c1, 10c2) aufweist, **dadurch gekennzeichnet, dass** das Trägerelement (40) eine an dem ersten Fahrzeugteil (10c1) angeordnete Sammelkonsole (40c) ist.

20. Kombination nach Anspruch 19, **dadurch gekennzeichnet, dass** der Leitungsspeicher (50) an oder ortsfest zu dem zweiten Fahrzeugteil (10c2) befestigt ist.

## Claims

1. Cable routing device for connecting a line strand (20) to a carrier element (40) which can be moved with respect to a vehicle (10), wherein the cable routing device has the carrier element (40), fastened pivotably to the vehicle, and a cable store (50), in which at least part of the line strand (20) is accommodated, wherein a spring element (21) is arranged between the carrier element (40) and the cable store (50)
**characterized in that**
by which spring element (21) the line strand (20) is supported loosely, and the line strand (20) is supported by the spring element (21) in such a way that only the sliding friction resulting from its weight has to be overcome for axial movement.

2. The cable routing device according to claim 1, **characterized in that** the spring element (21) is attached to the carrier element (40) and/or to the cable store (50).

3. The cable routing device according to claim 1 or 2, **characterized in that** the line strand (20) is inserted in the cable store (50) as a loop (22).

4. The cable routing device according to claim 3, **characterized in that** regardless of the relative position of the carrier element (40), the direction of the loop (22) is always the same.

5. The cable routing device according to claim 3 or 4, **characterized in that** in a straight-ahead position of the carrier element (40), the loop (22) within the cable store (50) has a maximum loop length (lₘₐₓ).

6. The cable routing device according to one of claims 3 to 5, **characterized in that** in a cornering position of the carrier element (40), the loop (22) within the cable store (50) has a minimum loop length (lₘᵢₙ).

7. The cable routing device according to one of claims 1 to 6, **characterized in that** the spring element (21) is attached to the carrier element (40) with a front guidance console (30) and/or the spring element (21) is attached to the cable store (50) with a rear guidance console (31).

8. The cable routing device according to claim 7, **characterized in that** the front and/or rear guidance console (30, 31) is mounted by means of a pivot bearing (32) about a vertical pivot axis (z) in the installed position.

9. The cable routing device according to claim 7 or 8, **characterized in that** guiding elements (34) which diverge outwards are arranged on opposite sides (33) of the front and/or rear guidance console (30, 31).

10. The cable routing device according to claim 9, **characterized in that** the guiding elements (34) protrude backwards and/or forwards in the installed position with respect to the front and/or rear guidance console (30, 31).

11. The cable routing device according to claim 9 or 10, **characterized in that** mutually facing inner sides (35) of the guiding elements (34) are designed with a curvature in opposite directions.

12. The cable routing device according to one of claims 1 to 11, **characterized in that** the line strand (20) comprises a plurality of supply lines (23a, 23b, 23c, 23d, 23e, 23f), which are encased and/or held together by at least one protective hose (24).

13. The cable routing device according to one of claims 1 to 12, **characterized in that** on the carrier element (40) a carrier element plug-element (41) and/or on or adjacent to the cable store (50) a cable store plug-element (54) is provided.

14. Combination of the cable routing device according to one of claims 1 to 13 with a vehicle (10) designed as a semi-trailer (10a), **characterized in that** the carrier element (40) is a wedge pivot frame (40a) which can be pivoted about a king pin (15).

15. Combination according to claim 14, **characterized in that** the cable store (50) is arranged under a trailer floor (11) of the semi-trailer (10a).

16. Combination according to claim 14 or 15, **characterized in that** the cable store (50) is attached to an underside of the trailer floor (11), a chassis component (13) or an attachment of the semi-trailer (10a).

17. Combination of a cable routing device according to one of claims 1 to 13 with a vehicle (10) designed as a trailer (10b), **characterized in that** the carrier element (40) is a connector console (40b) which is movably mounted to a drawbar (18).

18. Combination according to claim 17, **characterized in that** the cable store (50) is attached to or mounted stationary to the drawbar (18) of the trailer (10b).

19. Combination of a cable routing device according to one of claims 1 to 13 with a vehicle (10) designed as an articulated vehicle (10c), the articulated vehicle (10c) having a first and second vehicle part (10c1, 10c2) separated from one another by a swivel joint (19), **characterized in that** the carrier element (40) is a collecting console (40c) arranged on the first vehicle part (10c1).

20. Combination according to claim 19, **characterized in that** the cable store (50) is attached to or mounted stationary to the second vehicle part (10c2).

## Revendications

1. Dispositif d'acheminement de câble pour un raccordement d'une ligne de câbles (20) à un élément de support (40) mobile par rapport au véhicule (10), dans lequel le dispositif d'acheminement de câble présente l'élément de support (40) fixé de manière pivotante au véhicule et un accumulateur de câbles (50) dans lequel est logée au moins une partie de la ligne de câbles (20),
dans lequel un élément à ressort (21) est disposé entre l'élément de support (40) et l'accumulateur de câbles (50), **caractérisé en ce que** la ligne de câbles (20) est supporté de manière lâche par l'élément à ressort (21), et la ligne de câbles (20) est supporté par l'élément à ressort (21) de sorte que, pour un mouvement axial, seule la friction de glissement résultant de sa force de poids doit être surmontée.

2. Dispositif d'acheminement de câble selon la revendication 1, **caractérisé en ce que** l'élément élastique est fixé sur l'élément de support (40) et/ou sur l'accumulateur de câbles (50).

3. Dispositif d'acheminement de câble selon la revendication 1 ou 2, **caractérisé en ce que** la ligne de câbles (20) est insérée dans l'accumulateur de câbles (50) sous la forme d'une boucle (22).

4. Dispositif d'acheminement de câble selon la revendication 3, **caractérisé en ce que** le sens de la boucle (22) est toujours le même indépendamment de la position relative de l'élément de support (40).

5. Dispositif d'acheminement de câble selon la revendication 3 ou 4, **caractérisé en ce que,** dans une position de sortie en ligne droite de l'élément de support (40), la boucle (22) à l'intérieur de l'accumulateur de câbles (50) présente une longueur maximale de boucle (lₘₐₓ).

6. Dispositif d'acheminement de câble selon l'une des revendications 3 ou 5, **caractérisé en ce que,** dans une position d'angle de l'élément de support (40), la boucle (22) à l'intérieur de l'accumulateur de câbles (50) présente une longueur maximale de boucle (lₘᵢₙ).

7. Dispositif d'acheminement de câble selon la revendication 1 à 6, **caractérisé en ce que** l'élément à ressort (21) est fixé à l'élément de support (40) avec une console de guidage avant (30) et/ou à l'accumulateur de câbles (50) avec une console de guidage arrière (31).

8. Dispositif d'acheminement de câble selon la revendication 7, **caractérisé en ce que** la console de guidage avant et/ou arrière (30, 31) est montée au moyen d'un palier pivotant (32) autour d'un axe de pivotement (Z) vertical en position de montage.

9. Dispositif d'acheminement de câble selon la revendication 7 ou 8, **caractérisé en ce que** des éléments de guidage (34) divergeant vers l'extérieur sont disposés sur des côtés opposés (33) de la console de guidage avant et/ou arrière (30, 31).

10. Dispositif d'acheminement de câble selon la revendication 9, **caractérisé en ce que** les éléments de guidage (34) dépassent en position de montage vers l'arrière et/ou vers l'avant par rapport à la console de guidage avant et/ou arrière (30, 31).

11. Dispositif d'acheminement de câble selon la revendication 9 ou 10, **caractérisé en ce que** des côtés intérieurs (35) tournés l'un vers l'autre des éléments de guidage (34) sont réalisés avec une courbure en sens contraire.

12. Dispositif d'acheminement de câble selon l'une des revendications 1 à 11, **caractérisé en ce que** la ligne de câbles (20) comprend plusieurs câbles d'alimentation (23a, 23b, 23c, 23d, 23e, 23f) qui sont enveloppés et/ou maintenus ensemble par au moins un flexible de protection (24).

13. Dispositif d'acheminement de câble selon l'une des revendications 1 à 12, **caractérisé en ce qu'**il est prévu, sur l'élément de support (40), un élément de fiche d'élément de support (41) et/ou, sur ou à proximité de l'accumulateur de câbles (50), un élément de fiche d'accumulateur de câbles (54).

14. Combinaison d'un dispositif d'acheminement de câble selon l'une des revendications 1 à 13 avec un véhicule (10) réalisé sous la forme d'une semi-remorque (10a), **caractérisée en ce que** l'élément de support (40) est un cadre basculant en coin (40a) pouvant pivoter autour d'un pivot (15).

15. Combinaison selon la revendication 14, **caractérisée en ce que** l'accumulateur de câbles (50) est disposé sous un plancher de remorque (11) de la semi-remorque (10a).

16. Combinaison selon la revendication 14 ou 15, **caractérisée en ce que** l'accumulateur de câbles (50) est fixé sur une face inférieure du plancher de remorque (11), sur un élément de châssis (13) ou sur une partie de fixation de la semi-remorque (10a).

17. Combinaison d'un dispositif d'acheminement de câble selon l'une des revendications 1 à 13 avec un véhicule (10) réalisé sous la forme d'une remorque (10b), **caractérisée en ce que** l'élément de support (40) est un support de fiche (40b) monté de manière mobile par rapport à un timon (18).

18. Combinaison selon la revendication 17, **caractérisée en ce que** l'accumulateur de câbles (50) est fixé sur le timon (18) de la remorque (10b) ou de manière fixe par rapport à celui-ci.

19. Combinaison d'un dispositif d'acheminement de câble selon l'une des revendications 1 à 13 avec un véhicule (10) réalisé sous la forme d'un véhicule articulé (10c), dans laquelle le véhicule articulé (10c) présente une première et une seconde partie de véhicule (10c1, 10c2) séparées l'une de l'autre par une articulation tournante (19), **caractérisée en ce que** l'élément de support (40) est une console collectrice (40c) disposée sur la première partie de véhicule (10c1).

20. Combinaison selon la revendication 19, **caractérisée en ce que** l'accumulateur de câbles (50) est attaché ou fixé à la seconde partie de véhicule (10c2).
